# EUROPEAN PATENT APPLICATION

(11) **EP 4 530 494 A1**
(43) Date of publication of application: **02.04.2025**
(21) Application number: 23200094.3
(22) Date of filing: 27.09.2023
(51) Int. Cl.: F16F 9/19, F16F 9/512

(54) **SWITCHED RESERVOIR CONNECTION**

(71) Applicant: Öhlins Racing AB, 194 27 Upplands Väsby (SE)
(72) Inventor: Danek, Magnus, 186 92 Vallentuna (SE)
(74) Representative: AWA Sweden AB

(57) **Abstract**

The present disclosure relates to a valve arrangement (100) for use with a shock absorber (200) and a reservoir (300). The valve arrangement comprises a first port (110) adapted to be fluidly connected to a first chamber (210) of the shock absorber (200). The valve arrangement (100) further comprises a second port (120) adapted to be fluidly connected to a second chamber (220) of the shock absorber (200). The valve arrangement (100) further comprises a third and a fourth port (130, 140), each of which are adapted to be fluidly connected to a reservoir chamber (310) in the reservoir (300). The valve arrangement (100) is adapted to be able to provide a first main flow path (F1) between the first port (110) and the third port (130), and a second main flow path (F2) between the fourth port (140) and the second port (120). The valve arrangement (100) comprises a first valve (150) for regulating flow in the first main flow path (F1), and a second valve (180) for regulating flow in the second main flow path (F2). The first valve (150) comprises a first flow port (151) and a second flow port (152), wherein the first valve is adapted to operate between a closed position and an open position for regulating flow between the first flow port (151) and the second flow port (152) in response to a pressure input from the first and/or the second chamber (210, 220). A shock absorber (200) comprising the valve arrangement (100) and a method for regulating damping fluid flow by means of the valve arrangement (100) is also provided.

## Description

### TECHNICAL FIELD

The present disclosure relates to a valve arrangement for use with a shock absorber and a reservoir, a shock absorber incorporating the same, and a method for regulating a valve arrangement for use with a shock absorber and a reservoir.

### TECHNICAL BACKGROUND

Shock absorbers are designed to absorb and damp shock impulses affecting vehicles and thereby improve comfort and vehicle handling. One problem of shock absorbers is cavitation, i.e., the occurrence wherein cavities start forming in the damping fluid on a low-pressure side of a piston whenever the pressure on the low-pressure side becomes too low. Cavitation negatively impacts the performance of a shock absorber. Current shock absorbers use pressurized reservoirs for preventing cavitation. A typical reservoir valve needs to be tuned to match the pressure drop over the piston valve which is difficult to do satisfactorily without introducing a risk of compromising other functionalities of the shock absorber.

Accordingly, there exists a need for providing an improved solution for reducing the risk of cavitation.

### SUMMARY

It is an object of the present disclosure to provide an improved solution that alleviates at least some of the mentioned drawbacks within the prior art. A first object is to provide a valve arrangement for reducing the risk of cavitation in a shock absorber without the need of tuning a reservoir valve. The first object is solved by claim 1. A second object is to provide a shock absorber comprising such a valve arrangement. The second object is solved by the disclosure according to claim 14. A third object is to provide a method of adjusting damping fluid flow in a shock absorber reducing risk of cavitation. The third object is solved by the disclosure according to claim 15. Preferred embodiments are set forth in the dependent claims.

Cavitation is a well-known issue within the field of shock absorbers which may be caused due to a decrease in damping fluid pressure. In conventional mono-tube shock absorbers, there is no outer fluid reservoir; all fluid is within the mono-tube. The piston of the mono-tube is moveable in a piston chamber, which piston separates the piston chamber in a rebound chamber and a compression chamber. The compression chamber is separated from a high-pressure gas charge by means of a floating piston. Thus, when the piston moves in a compression stroke, thereby moving towards the floating piston, the fluid pushes against the floating piston and compresses the gas charge. When the piston moves in a rebound stroke, the high-pressure gas charge prevents the damping fluid pressure in the compression chamber from falling too low, thereby reducing the risk of cavitation in the compression chamber. However, for such a damper, the damping fluid pressure in the rebound chamber greatly reduces during the compression stroke. If the shock absorber is compressed with sufficient force, damping fluid in the rebound chamber will be exposed to pressure drop and possibly cavitation. If the shock absorber is intended for an application where this may occur, the shock absorber may then be adapted so that the compression chamber is connected to a reservoir external to the piston chamber and a reservoir valve is arranged to regulate flow between the compression chamber and the reservoir. For optimal performance, the pressure drop over the reservoir valve must be tuned to match the pressure drop over the shock absorber piston during the compression stroke, which then removes the damping fluid pressure drop in the rebound chamber during the compression stroke, and thereby the risk of cavitation. However, this requires that the reservoir valve is accurately tuned for each main setting of the shock absorber which in turn makes it necessary to adjust the main setting and the reservoir valve at the same time to keep the optimal function. In practice, this is difficult to achieve.

The inventive concept of the disclsoure is based on the insight of providing a valve arrangement for switching a reservoir connection to fluidly connect the reservoir to a low-pressure side of the piston. When the valve arrangement fluidly connects the reservoir to a low-pressure side of the piston, the reservoir may counteract an undesired pressure drop, for instance reducing rate and/or amount of pressure drop or keeping pressure constant. By this, the risk of cavitation may be reduced to a satisfactory level or removed without the need of tuning a reservoir valve.

A piston divides a piston chamber into two damping fluid spaces, a first damping fluid space and a second damping fluid space, which may be referred to as compression chamber and rebound chamber, respectively. When the piston moves, damping fluid in one of the damping fluid spaces is subjected to expansion while damping fluid in the other damping fluid space is subjected to compression, thereby resulting in a low-pressure side and a high-pressure side.

By low-pressure side, it may be meant the damping fluid space associated with a lower damping fluid pressure. For example, during a compression stroke, the piston may be moved so that damping fluid pressure in the rebound chamber is lower relative the damping fluid pressure in the compression chamber. When this is the case, low-pressure side may refer to the rebound chamber. During a rebound stroke, the piston may be moved so that damping fluid pressure in the compression chamber is lower relative the damping fluid pressure in the rebound chamber. When this is the case, low-pressure side may refer to the compression chamber.

By high-pressure side, it may be meant the damping fluid space associated with a higher damping fluid pressure. For example, during a compression stroke, the piston may be moved so that damping fluid pressure in the compression chamber is higher relative the damping fluid pressure in the rebound chamber. When this is the case, high-pressure side may refer to the compression chamber. During a rebound stroke, the piston may be moved so that damping fluid pressure in the rebound chamber is higher relative the damping fluid pressure in the compression chamber. When this is the case, high-pressure side may refer to the rebound chamber.

According to a first aspect of the disclosure, there is provided a valve arrangement for use with a shock absorber and a reservoir. The valve arrangement comprises a first port adapted to be fluidly connected to a first chamber of the shock absorber, and a second port adapted to be fluidly connected to a second chamber of the shock absorber. The valve arrangement further comprises a third and a fourth port, each of which are adapted to be fluidly connected to a reservoir chamber in the reservoir. The valve arrangement is adapted to be able to provide a first main flow path between the first port and the third port, and a second main flow path between the fourth port and the second port. The valve arrangement comprises a first valve for regulating flow in the first main flow path, and a second valve for regulating flow in the second main flow path. The first valve comprises a first flow port and a second flow port, wherein the first valve is adapted to operate between a closed position and an open position to regulate flow between the first flow port and the second flow port in response to a pressure input from the first and/or the second chamber.

The valve arrangement as disclosed herein is able to fluidly connect the reservoir chamber to the low-pressure side of a piston of the shock absorber, regardless of the stroke direction. This is advantageous since it reduces the risk of low-pressure drops and thereby cavitation.

The valve arrangement provides a first main flow path between the first chamber and the reservoir. The first main flow path may be directed from the first chamber to the reservoir. The valve arrangement provides a second main flow path between the reservoir and the second chamber. The second main flow may be directed from the reservoir to the second chamber. It is advantageous that the first main flow path is separated from the second main flow path since damping fluid flow in the first main flow path can be regulated separately from the second main flow path, and vice versa. Thereby, the valve arrangement provides for the first main flow path being open and the second main flow path being closed. When the first main flow path is open, the valve arrangement fluidly connects the reservoir to the first chamber. When the second flow path is closed, the valve arrangement fluidly disconnects the reservoir from the second chamber. This is advantageous since it allows for only the low-pressure side of the piston to be connected to the reservoir. It is further advantageous since it allows for the high-pressure side of the piston to be disconnected from the reservoir, thereby no reservoir valve is required. By "main flow path" it may be intended a regulatory flow path fluidly connecting two or more damping flow spaces for enabling the intended effect of the valve arrangement.

The first chamber and the second chamber of the shock absorber may be rebound chamber and compression chamber respectively, or vice versa. Depending on piston movement, low-pressure side may refer to the first chamber or the second chamber.

The first valve may be adapted to operate in response to pressure in the first chamber, second chamber, and/or both first and second chamber depending on stroke direction of the piston. When the first valve is open, the valve arrangement fluidly connects the reservoir to the first chamber. When the first valve is closed, the reservoir is fluidly disconnected to the first chamber.

The second valve may be adapted to operate in response to pressure in the fourth port and/or in the second port. The second valve may be adapted to be open if the pressure in the fourth port is higher than the pressure in the second port. The second valve may be adapted to be closed if the pressure in the fourth port is lower than the pressure in the second port. The second valve may be adapted to open in response to the pressure in the fourth port being higher than the pressure in the second port and be closed otherwise. The second valve may be a check valve. The second valve may be designed for controlling flow associated with piston rod fluid displacement. By the term piston rod fluid displacement it may be meant the damping fluid displacement caused by the piston rod entering one of the fluid spaces, thereby taking up additional space.

Further, the valve arrangement enables satisfactory performance even if the damping characteristics of the shock absorber are adjusted. There is no need to adjust or tune a reservoir valve even if such adjustments are made. Thus, the valve arrangement removes the need to tune or adjust a reservoir valve as in some solutions of the prior art.

By compression stroke, it may be meant the stroke direction when the piston compresses the compression chamber. By rebound stroke, it may be meant the stroke direction when the piston rebounds from the compression chamber. A piston rod may be connected to the piston at either side of the piston, causing piston rod fluid displacement during strokes. The shock absorber may be adapted such that the piston rod extends through the rebound chamber. The piston rod fluid displacement may be positive during compression stroke and negative during rebound stroke. The valve arrangement may advantageously regulate damping fluid flow in response to piston rod fluid displacement.

Alternatively, the shock absorber may be adapted such that the piston rod extends through the compression chamber. In that case the piston rod fluid displacement may be negative during the compression stroke and positive during the rebound stroke. For such a shock absorber, the valve arrangement may advantageously be arranged such that the first port is connected to the compression chamber and the second port is connected to the rebound chamber.

Alternatively, the shock absorber may be adapted such that the rod extends through both of the compression and the rebound chamber. In such a case, both the first and the second valve may advantageously be a pressure regulated valve, such as a check valve.

By "fluidly connected" or the like, it may be meant that a component A is connected to a component B such that damping fluid may flow between a component A and a component B. For instance, by the reservoir being fluidly connected to a low-pressure side of the piston, it should be understood as damping fluid may flow between the reservoir and the low-pressure side of the piston along predetermined flow path(s). By "fluidly disconnected" or the like, it may be meant that damping fluid is prevented from flowing between a component A and a component B. For instance, by the reservoir being fluidly disconnected to a low-pressure side of the piston, it should be understood as damping fluid is prevented from flowing between the reservoir and the low-pressure side of the piston along predetermined flow path(s). A piston may incorporate one or more valves for enabling flow between low-pressure side and high-pressure side of the piston. It may be understood that said predetermined flow path(s) does not pass through the high-pressure side of the piston.

According to one embodiment, the first valve is adapted to operate to an open position in response to a first pressure differential between the first port and the second port, wherein the pressure in the second port is higher than the pressure in the first port, and/or wherein the first valve is adapted to operate to a closed position in response to a second pressure differential between the first port and the second port, wherein the pressure in the second port is lower than the pressure in the first port.

Thereby, when the valve arrangement is fluidly connected with a shock absorber and a reservoir, the first valve may advantageously regulate the first main flow path to only be open if fluid pressure in the first port is lower than fluid pressure in the second port.

According to one embodiment, said first pressure differential corresponds to a pressure differential over a piston of the shock absorber.

Thereby, when arranged with a shock absorber and a reservoir, the first valve may advantageously regulate the first main flow path to only be open if the first chamber is the low-pressure side of the piston.

Alternatively, the first pressure differential may be proportional to a pressure differential over the piston of the shock absorber or be otherwise related to the pressure differential over the piston of the shock absorber.

According to one embodiment, the first valve comprises a pressure input port fluidly connected to the second port, wherein the pressure input port is adapted for enabling the first valve to be exposed to said pressure differential.

By this, the first valve may be adapted to directly act in response to pressure input from the first and second chamber. Thereby, the first valve may regulate the first main flow path in response to two separate inputs, which is advantageous for distinguishing a pressure differential between said chambers.

According to one embodiment, the valve arrangement is adapted such that the pressure input port is fluidly connectable to the second chamber.

According to one embodiment, the first valve comprises a valve member adapted to be moveable relative a valve housing to open or close the first valve, wherein a first side of the valve member is fluidly connected to the pressure input port and a second side of the valve member is fluidly connected to the first flow port, wherein the first valve is adapted such that it opens as a result of a first pressure differential acting on the moveable valve member reaching a first predetermined pressure differential. The valve member may be adapted to move along an axis. The first and second sides of the valve member may be located at axially opposite sides of the moveable valve member.

According to one embodiment, the valve arrangement is adapted to provide at least one bleed flow path fluidly connecting the first port and the second port.

By this, the valve arrangement may allow a bleed flow between the first and the second chamber.

By bleed flow path, it may be meant a path of a bleed flow. By bleed flow, it may be meant a flow flowing through an orifice having an orifice size which does not depend on pressure. The orifice size may be fixed or may be adjustable in a pressure independent manner.

According to one embodiment, the first valve comprises one or more resilient members such as a spring for applying a force on the valve member for closing the first valve.

By this, responsiveness of the valve arrangement may be improved. The first valve may experience a phase shift in response to the pressure differential in the shock absorber. The use of the resilient member may thereby advantageously enhance responsiveness of the valve member and thereby reduce phase shift of the valve arrangement. The resilient member is preferably a spring.

According to one embodiment, the second valve is a pressure regulated valve such as a check valve. By this, the second valve may open and close the second main flow path accordingly in response to pressure differential over the check valve.

In an embodiment where the piston rod displacement promotes a damping fluid flow from the reservoir to the second fluid chamber during the rebound stroke, the second valve may advantageously be a check valve. Thereby, the fluid flow from the reservoir may open the check valve enabling the reservoir to pressurize the second chamber when it is the low-pressure side of the piston.

According to one embodiment, the valve arrangement is adapted to be at least partly or wholly arranged at a piston assembly of the shock absorber. The piston assembly comprises the piston and optionally the piston rod of the shock absorber. The valve arrangement may be arranged at the piston. The valve arrangement may be arranged at the piston rod. Thereby, a more compact solution may be realized.

According to one embodiment, the first valve is controllable by electromechanical means.

By this, the first valve may regulate the first main flow path more quickly in response to pressure, and/or may regulate the first main flow path more quickly in response to pressure without phase shift. Moreover, it allows for further control of the first valve.

Electrotechnical means may for instance include the first valve being an electromechanical valve, such as a solenoid valve.

The second valve may also or alternatively be controllable by electromechanical means. The second valve may be an electromechanical valve, such as a solenoid valve.

According to one embodiment, the valve arrangement comprises a third and a fourth valve arranged to regulate damping fluid along flow paths fluidly connecting the first port and the second port.

This may advantageously enable further control of damping characteristics.

According to one embodiment, at least one of the third and fourth valve is adapted to be controlled by electromechanical means.

This is advantageous for reducing phase shift of the third and fourth valve.

Electrotechnical means may for instance include the third and/or fourth valve being an electromechanical valve, such as a solenoid valve.

According to a second aspect of the disclosure, a shock absorber is provided. The shock absorber comprises a valve arrangement according to the first aspect or any embodiments thereof. The shock absorber may comprise a reservoir. The shock absorber may be adapted to fluidly connect to a reservoir via the valve arrangement.

According to a third aspect of the disclosure, there is provided a method for adjusting a damping fluid flow in a shock absorber. The method comprises a step of providing a valve arrangement according to the first aspect or any embodiments thereof. The method further comprises steps of, in response to a first pressure input from the first or second chamber, operating the valve arrangement such that the first valve is open and the second valve is closed, and/or in response to a second pressure input from the first or second chamber, operating the valve arrangement such that the first valve is closed and the second valve is open.

This provides for an advantageous method for fluidly connecting the reservoir to the low-pressure side of a piston and disconnecting the reservoir from the high-pressure side of the piston, thereby reducing the risk of cavitation.

Effects and features of the second and third aspects are largely analogous to those described above in connection with the first aspect. Embodiments mentioned in relation to the first aspect are largely compatible with the second and third aspects. It is further noted that the inventive concepts relate to all possible combinations of features unless explicitly stated otherwise.

### BREIF DESCRIPTION OF THE DRAWINGS

The disclosure is described in the following illustrative and non-limiting detailed description of exemplary embodiments, with reference to the appended drawings, wherein:
Fig. 1 is a schematical view of a valve arrangement according to an embodiment of the disclosure, wherein the valve arrangement is fluidly connected to a shock absorber and a reservoir;
Fig. 2 is a schematical view of a valve arrangement according to an embodiment of the disclosure, wherein the valve arrangement is fluidly connected to a shock absorber and a reservoir;
Figs. 3a-3b show a cross sectional side-view of the first valve according to an embodiment of the present disclosure;
Fig. 4 is a schematical view of a valve arrangement according to an embodiment of the disclosure, wherein the valve arrangement is fluidly connected to a shock absorber and a reservoir;
Fig. 5 is a schematical view of a valve arrangement according to an embodiment of the disclosure;
Fig. 6 illustrate rebound chamber pressure as a function of piston movement in a rebound chamber of a shock absorber connected to a valve arrangement according to an embodiment of the disclosure; and

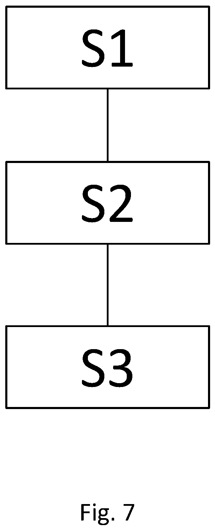

Fig. 7 shows a schematic flow chart of a method according to an embodiment of the present disclosure.

### DESCRIPTION OF EMBODIMENTS

Hereinafter, the disclosure in various aspects will be described with reference to the illustrative embodiments. All figures are schematic, not necessarily to scale, and generally only show parts which are necessary in order to elucidate the disclosure, wherein other parts may be omitted or merely suggested. Throughout the figures the same reference signs designate the same, or essentially the same features. Various elements and arrangements are schematically depicted in the drawings for purposes of explanation only and so as to not obscure the description with details that are well known to those skilled in the art. Nevertheless, the attached drawings are included to describe and explain illustrative examples of the disclosed subject matter.

The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

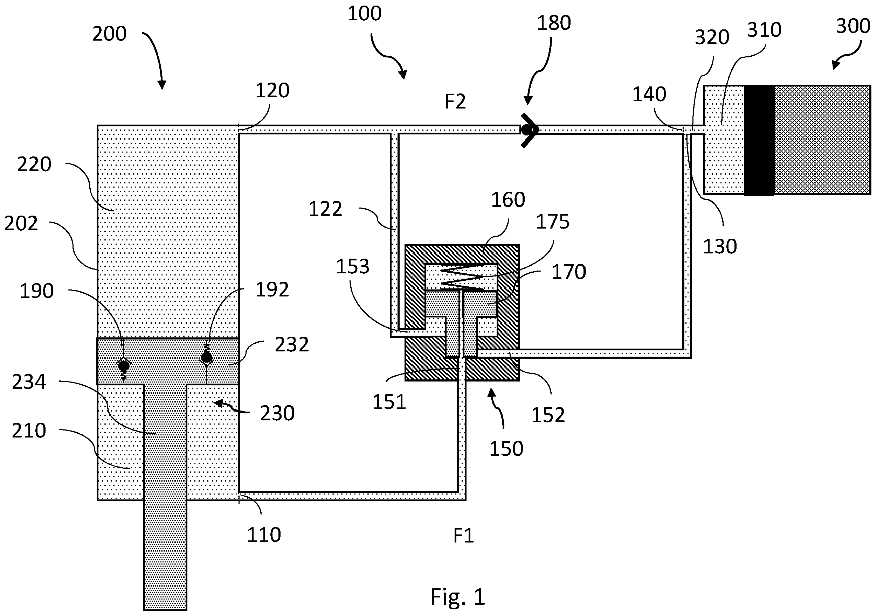

Fig. 1 shows a valve arrangement 100 for use with a shock absorber 200 and a reservoir 300. According to one embodiment, the valve arrangement 100 comprises a first port 110 adapted to be fluidly connected to a first chamber 210 of the shock absorber 200. The first chamber 210 may be a rebound chamber. The valve arrangement 100 further comprises a second port 120 adapted to be fluidly connected to a second chamber 220 of the shock absorber 200. The second chamber 220 may be a compression chamber. The valve arrangement 100 further comprises a third and a fourth port 130, 140, each of which are adapted to be fluidly connected to a reservoir chamber 310 in the reservoir 300. The valve arrangement 100 is adapted to be able to provide a first main flow path F1 between the first port 110 and the third port 130, and a second main flow path F2 between the fourth port 140 and the second port 120. The valve arrangement 100 comprises a first valve 150 for regulating flow in the first main flow path F1, and a second valve 180 for regulating flow in the second main flow path F2. The first valve 150 comprises a first flow port 151 and a second flow port 152, wherein the first valve 150 is adapted to operate between a closed position and an open position for regulating flow between the first flow port 151 and the second flow port 152 in response to a pressure input from the first and/or the second chamber 210, 220. The first flow port 151 may be fluidly connected to the first port 110. The second flow port 152 may be fluidly connected to the third port 130.

As shown in Fig. 1, the third port 130 and the fourth port 140 may be connected to a common port 320 of a reservoir chamber 310 of the reservoir 300. Alternatively, the third port 130 and the fourth port 140 may independently be fluidly connected to the reservoir chamber 310.

The first valve 150 may regulate the flow to be open in the first main flow path F1 by fluidly connecting the first flow port 151 to the second flow port 152. The first valve 150 may regulate the flow in the first main flow path F1 to be closed by fluidly disconnecting the first flow port 151 and the second flow port 152.

When the first valve 150 regulates the first main flow path F1 to be open, damping fluid may flow via the first main flow path F1 between the first chamber 210 and the reservoir chamber 310 which is located inside the reservoir 300.

The first valve 150 may be adapted such that it regulates the first main flow path F1 to be open in response to pressure. More specifically, the first valve 150 may be adapted to regulate the first main flow path F1 to be open if fluid pressure in the second port 120 is higher than fluid pressure in the first port 110. Since the second port 120 is fluidly connected to the second chamber 220 and the first port 110 is fluidly connected to the first chamber 210, the first valve 150 may in this manner operate in response to pressure in the first and/or second chamber 210, 220.

The second valve 180 may regulate the flow to be open in the second main flow path F2 by fluidly connecting the fourth port 140 to the second port 120. The second valve 180 may regulate the flow in the second main flow path F2 to be closed by fluidly disconnecting the fourth port 140 to the second port 120.

The second valve 180 may be adapted such that it regulates the second main flow path F2 to be open if fluid pressure in the fourth port 140 is higher than fluid pressure in the second port 120.

The first valve 150 and the second valve 180 are preferably pressure regulated valves. Alternatively, the first valve 150 and the second valve 180 may be mechanically pressure independent valves but controllable in response to pressure input.

The first valve 150 may for example be any of a poppet valve, a spool valve, and a shim valve.

The second valve 180 may for example be any of a check valve, a poppet valve, a needle valve, a shim valve, and a spool valve.

By the term poppet valve, it may be meant a valve that utilizes a plunger or a ball to regulate flow through an opening of the valve. The plunger or ball may be movable relative the opening into a position where it prevents flow through the opening.

By the term spool valve, it may be meant a valve that utilizes a movable cylindrical spool within a housing to regulate fluid flow.

By the term shim valve, it may be meant a valve comprising a stack of thin pieces (shims) of substantially similar or different size, for providing resistance which a flow has to overcome to open a valve face in a first direction. The shim stack may prevent the flow in the opposite the first direction.

By the term check valve, it may be meant a valve allowing fluid to flow along a first direction and substantially prevents the flow in the opposite direction.

By the term needle valve, it may be meant a valve that allows precise and regulated flow control comprising a small port and needle shaped plunger adapted to regulate the flow rate through the small port.

In the exemplifying embodiment, the valve arrangement 100 may be connected with the shock absorber 200 and the reservoir 300. The shock absorber 200 comprises a piston 232. The piston 232 may move in direction of a compression stroke to compress the second chamber 220 of the shock absorber 200 and expand the first chamber of the shock absorber 200. Further, the piston 232 may move direction of a rebound stroke, which may be defined opposite the moving direction of the piston 232 during the compression stroke. The piston 232 thereby moves in a direction for compressing the first chamber 210.

When the shock absorber 200 is static, i.e., the piston 232 does not move relative the piston chamber, damping fluid pressure may stabilize towards a net zero pressure differential over the piston. The damping fluid pressure in the respective chambers may stabilize towards a neutral pressure, by which neutral pressure it may be meant the pressure in the chambers when there is a net zero pressure differential over the piston. The reservoir 300 may pressurize damping fluid in the reservoir chamber 310 according to the neutral pressure.

During the compression stroke, the piston 232 moves in the piston chamber, causing the fluid pressure in the second chamber 220 to increase, for instance from the neutral pressure if there was a net zero pressure differential over the piston 232. The piston 232 may be moved so that fluid pressure in the second chamber 220 is higher than fluid pressure in the first chamber 210. Fluid pressure in the second port 120 may thereby be higher than fluid pressure in the first port 110. The first valve 150 may in response to pressure from the first and second port 110, 120, regulate the first main flow path F1 to be open. The reservoir chamber 310 will thereby be fluidly connected to the first chamber 210. The reservoir chamber 310 may then pressurize the first chamber 210, thereby reducing risk of cavitation. The reservoir chamber 310 may pressurize the first chamber 210 towards the neutral pressure, preferably to maintain the neutral pressure.

Further, since the second port 120 is fluidly connected to the second chamber 220, the fluid pressure in the second port 120 increases during the compression stroke. Since fluid pressure in the fourth port 140 is substantially equal to the fluid pressure in the reservoir chamber 310, the pressure differential over the second valve 180 causes the second valve 180 to be in a closed position, thereby regulating the second main flow path F2 to be closed. Thereby, in the exemplified embodiment, during the compression stroke, the piston is moved so that the reservoir chamber 310 is fluidly connected to the first chamber 210 via the first main flow path F1 while the reservoir chamber 310 is fluidly disconnected from the second chamber 220.

During the rebound stroke, the piston 232 moves in the piston chamber, causing the fluid pressure in the first chamber 210 to increase, for instance from the neutral pressure if there was a net zero pressure differential over the piston 232. The piston 232 may be moved so that fluid pressure in the first chamber 210 become higher than fluid pressure in the second chamber 220. Fluid pressure in the first port 110 may thereby be higher than fluid pressure in the second port 120. The first valve 150 will in response to pressure from the first and second port 110, 120, regulate the first main flow path F1 to be closed.

Further, fluid pressure in the fourth port 140 may be substantially equal to the fluid pressure in the reservoir chamber 310. During the rebound stroke, the fluid pressure in the second chamber 220 decreases, and since the second port 120 is fluidly connected to the second chamber 220, the fluid pressure also decreases in the second port 120. When the fluid pressure in the second port 120 is lower than the fluid pressure in the fourth port 140, the second valve 180 regulates the second main flow path F2 to be open. The reservoir chamber 310 may thereby be fluidly connected to the second chamber 220. The reservoir chamber 310 may thereby be able to pressurize the second chamber 220, preferably so that fluid pressure in the second chamber maintains neutral pressure. Thereby, in the exemplifying embodiment, during the rebound stroke, the reservoir chamber 310 may be fluidly connected to the second chamber 220 via the second main flow path F2.

In addition, the reservoir 300 may be adapted so that it pressurizes the low-pressure side to neutral pressure, which is the pressure in the shock absorber when the shock absorber 200 is at rest and the first and second chambers 210, 220 have equalized in terms of pressure to the same pressure, i.e., a neutral pressure in which case there is a net zero pressure differential over the piston 232. When the first main flow path F1 opens, the reservoir 300 may counteract pressure drop in the first chamber 210, optionally so that the fluid pressure in the first chamber 210 is increased towards or maintained at a neutral pressure. When the second flow path F2 opens, the reservoir 300 may counteract pressure drop in the second chamber 220, optionally so that the fluid pressure in the second chamber 220 is maintained at a neutral pressure. The first and second valve 150, 180 may respectively open and close to allow pressurization of the first and second chambers 210, 220 respectively by means of the reservoir 300, thereby reducing risk of cavitation.

In one exemplary embodiment, the first valve 150 is adapted to operate to an open position in response to a first pressure differential between the first port 110 and second port 120, wherein pressure in the second port 120 is higher than pressure in the first port 110. According to one embodiment, the first valve 150 may be further or alternatively adapted to operate to a closed position in response to a second pressure differential between the first port 110 and the second port 120, wherein pressure in the second port 120 is lower than pressure in the first port 110.

Fluid pressure in the second port 120 may be higher than fluid pressure in the first port 110 as a consequence of a compression stroke of the piston 232, thereby providing the first pressure differential.

Fluid pressure in the first port 110 may be higher than fluid pressure in the second port 120 as a consequence of a rebound stroke of the piston 232, thereby providing the second pressure differential.

Said first pressure differential may according to one exemplary embodiment correspond to a pressure differential over a piston 232 of the shock absorber 200.

In one exemplary embodiment, the first valve 150 comprises a pressure input port 153 connected to the second input port 120. Wherein the pressure input port 153 is adapted for enable the first valve to be exposed to said pressure differential.

As shown in fig. 1, the pressure input port 153 may be fluidly connected to the second port 120 via a pressure input flow path 122. Fluid pressure in the second port 120 may thereby propagate, via the pressure input flow path 122, to the pressure input port 153. Further, the first valve 150 may be fluidly connected to the first port 110 via the first flow port 151.

Thereby, the first valve 150 may be exposed to said pressure differential between the first port 110 and the second port 120. Further, the first valve 150 may be exposed to said pressure differential regardless of whether the first valve 150 regulates the first main flow path F1 to be open or closed and regardless of whether the second valve 180 regulates the second main flow path F2 to be open or closed.

In one exemplary embodiment, the valve arrangement 100 is adapted such that the pressure input port 153 is fluidly connectable to the second chamber 220.

In the exemplifying embodiment, the pressure input port 153 may be fluidly connected to the second chamber 220 of the shock absorber 200 via the second port 120.

In the exemplifying embodiment shown in e.g., Fig. 1, the first valve 150 comprises a valve member 170 adapted to be moveable relative a valve housing 160 to open or close the first valve 150, wherein a first side of the valve member 170 is fluidly connected to the pressure input port 153 and a second side of the valve member 170 is fluidly connected to the first flow port 151, wherein the first valve 150 is adapted such that it opens as a result of a first pressure differential acting on the valve member 170 reaching a first predetermined pressure differential.

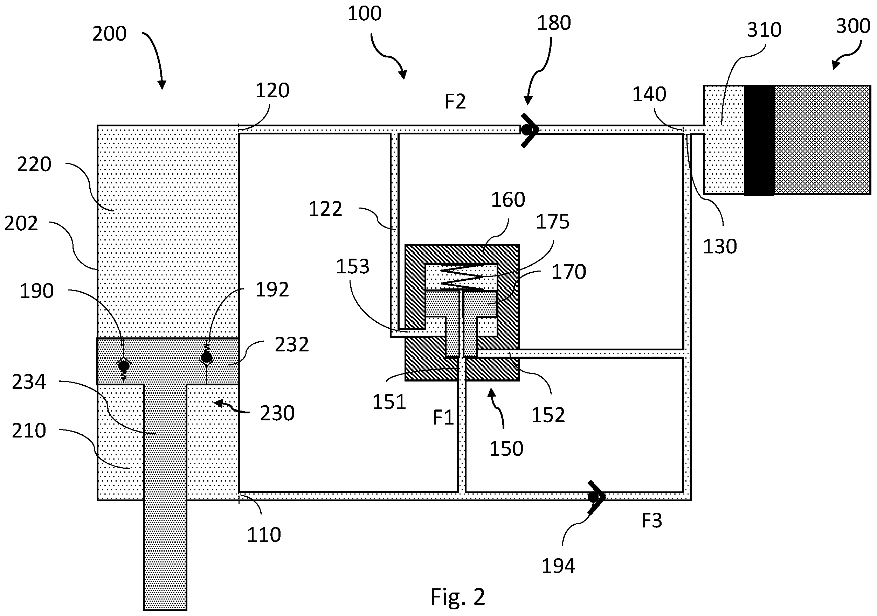

As shown in Fig. 2, the valve arrangement 100 may comprise a fifth valve 194. The fifth valve 194 may be a pressure regulated valve such as a check valve. The fifth valve 194 may be adapted to regulate flow in a third main flow path F3 between the reservoir chamber 310 and the first chamber 210. The third main flow path F3 may be defined as a flow path between the third port 130 and the first port 110. The fifth valve 194 may regulate flow in the third main flow path F3 to be open in response to fluid pressure in the first chamber 210 being lower than the neutral pressure. The fifth valve 194 may regulate flow in the third main flow path F3 to be closed in response to fluid pressure in the first chamber 210 being higher than the neutral pressure.

The fifth valve 194 may regulate the third main flow path F3 to be open when fluid pressure in the first chamber 210 is lower than the pressure in the reservoir chamber 310. This may be advantageous to reduce the risk for pressure drop in the first chamber 210 during the compression stroke.

During a compression stroke of the shock absorber 200, the piston 232 may move in a direction such that the first chamber 210 is expanded. At an initial stage of the compression stroke, the first valve 150 may be late in opening the first main flow path F1. The third valve 194 may, during this initial stage of the compression stroke, advantageously regulate the third main flow path F3 to be open. The reservoir 300 may thereby be fluidly connected to the first chamber 210 and able to reduce an initial pressure drop therein during the initial stage of the compression stroke.

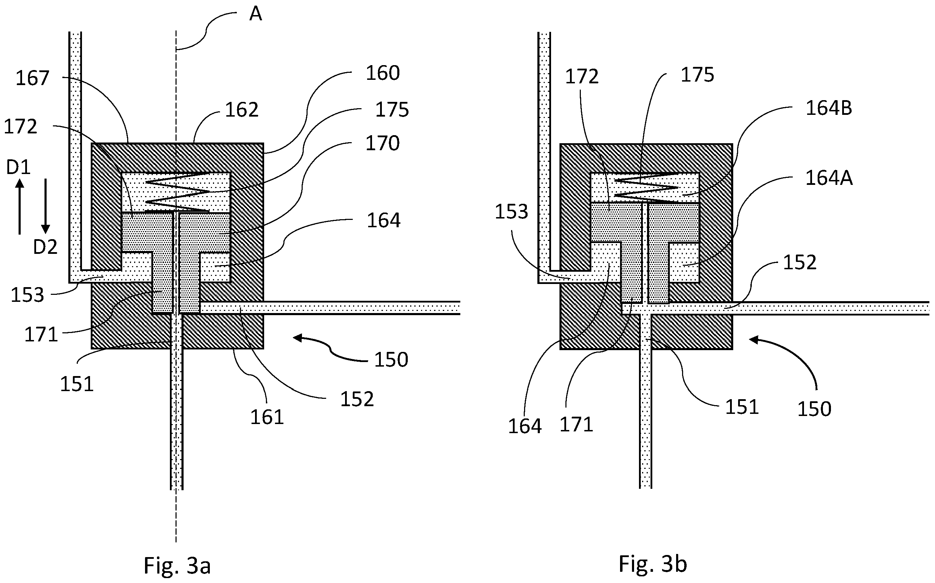

As shown in Fig. 3a and 3b, the first valve 150 may comprise a valve housing 160 and the valve member 170, which is movable in relation to the valve housing 160. The valve housing 160 may have a longitudinal extension, along a centre axis A, from a first valve housing side 161 to a second valve housing side 162. A first direction D1 may be exemplified as a direction along axis A from the first valve housing side 161 towards the second valve housing side 162. A second direction D2 may be exemplified as the opposite direction of D1. The valve member 170 may be adapted to be movable in relation to the valve housing 160 along the axis A in the first direction D1 and the second direction D2. The valve member 170 may be movable between a first and second position. Fig 3b visualize the valve member 170 when it is in its first position. Fig. 3a visualize the valve member 170 when it is in its second position.

In the embodiment exemplified in Figs. 3a-3b, the valve housing 160 comprises a valve cavity 164 located inside the valve housing 160. The valve member 170 may be arranged inside the valve cavity 164.

The valve member 170 may be further adapted to comprise a first main flow closing portion 171. The valve member 170 may be moved relative the valve housing 160 such that the first main flow closing portion 171 fluidly disconnects the first flow port 151 and the second flow port 152. The valve member 170 may be further adapted to comprise a partition portion 172. The partition portion 172 may partition the valve cavity 164 into a first valve cavity portion 164A and a second valve cavity portion 164B. The first valve cavity portion 164A may be fluidly connected to the pressure input port 153. The valve member 170 may be adapted to provide a fluid channel extending from through the first main flow closing portion 171 and the partition portion 172. The fluid channel may extend along the centre axis A. The fluid channel may fluidly connect the first port 110 and the second valve cavity portion 164B. The valve member 170 may be moved relative the valve housing 160 in response to a pressure differential acting on the partition portion 172. The pressure differential acting on the partition portion 172 is related to the pressure differential over the piston 232 in the shock absorber 200.

The valve arrangement 100 may comprise at least one bleed flow path fluidly connecting the first port 110 and the second port 120.

As shown in Fig. 3a-3b, the valve arrangement 100 may provide a resilient member 175. The resilient member 175 may be arranged in the second valve cavity 164B. The resilient member 175 may thus force the valve member 170 to move in the second direction D2 towards its first position. The valve arrangement 100 may comprise a second resilient member (not shown) arranged in the first valve cavity 164A for facilitating the valve member 170 to move in the first direction D1 towards its second position. The second resilient member is preferably a spring.

The second valve 180 is in e.g., Fig.1 exemplified as a check valve. However, the second valve 180 may be realized as other types of valves. For instance, it may be an electromechanical valve. The first valve 170 may be controllable by electromechanical means. The first valve 170 may be an electromechanical valve.

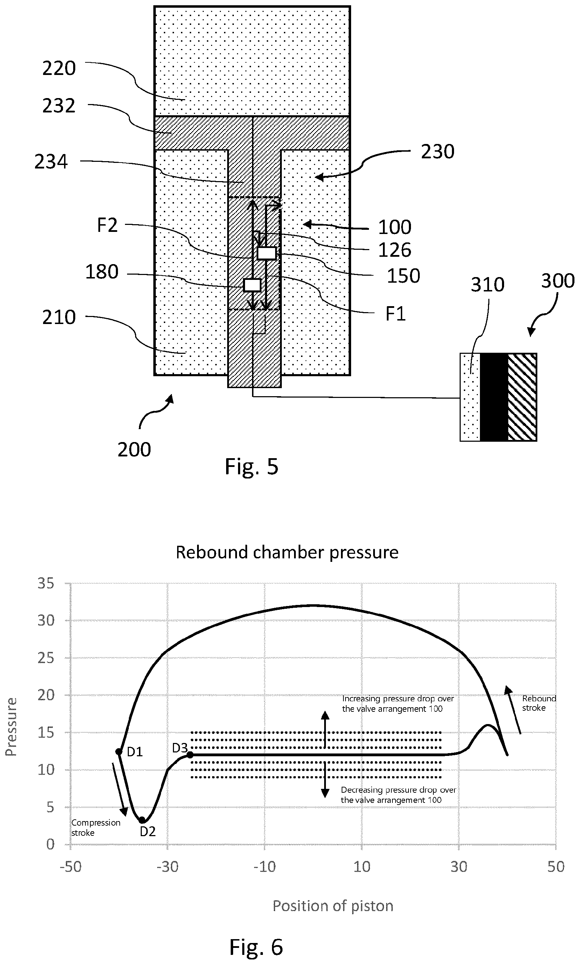

The valve arrangement 100 is adapted to be at least partly arranged at a piston assembly 230 of the shock absorber 200 as indicated in Fig. 5. The piston assembly 230 may comprise the piston 232 and the piston rod 234. The valve arrangement 100 may be arranged at the piston 232. The valve arrangement 100 may be arranged at the piston rod 234.

According to one embodiment of the present disclosure, the valve arrangement 1 comprises at least one of or both a third and a fourth valve 190, 192 arranged to regulate damping fluid along flow paths fluidly connecting the first port 110 and the second port 120. According to the present disclosure, the valve arrangement 1 may comprise a third valve 190 arranged to regulate damping fluid along a flow path fluidly connecting the first port 110 and the second port 120. According to the present disclosure, the valve arrangement 1 may comprise a third valve 190 and a fourth valve 192, each regulating damping fluid along separated flow paths fluidly connecting the first port 110 and the second port 120.

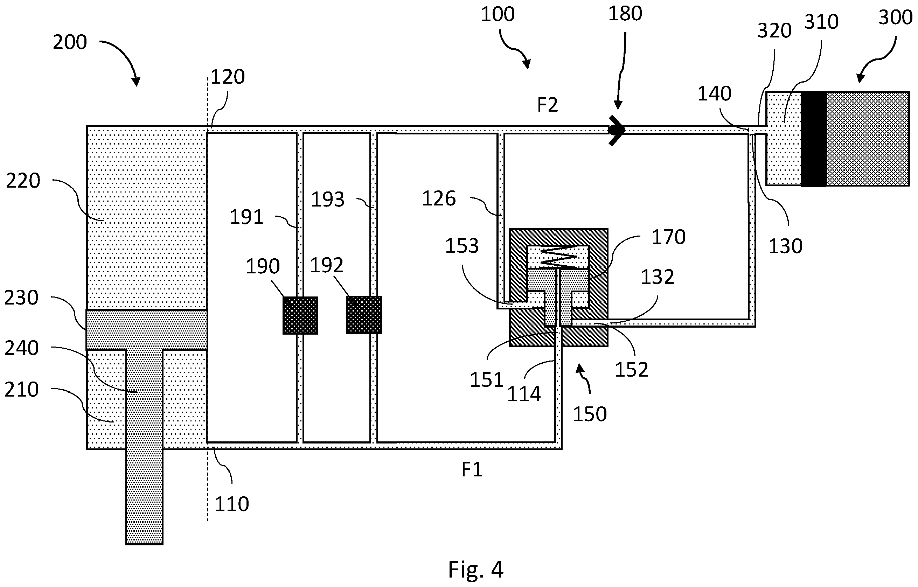

As shown in Fig. 4, a first auxiliary flow path 191 may fluidly connect fluid in the first port 110 with damping fluid in the second port 120. The third valve 190 may regulate flow in in the first auxiliary flow path 191. Further, a second auxiliary flow path 193 may fluidly connect fluid in the first port 110 with damping fluid in the second port 120. The fourth valve 192 may regulate flow in in the second auxiliary flow path 193. The third valve 190 may regulate damping flow to only pass from the first chamber 210 to the second chamber 220. The fourth valve 192 may regulate damping fluid to only pass from the second chamber 220 to the first chamber 210.

Alternatively, the third valve 190 may be located in the piston 232. The third valve 190 may be arranged to regulate damping fluid along a flow path through the piston 232 connecting the first and second chamber 210, 220. The fourth valve 192 may be located in the piston 232. The fourth valve 192 may be arranged to regulate damping fluid along a flow path through the piston 232 connecting the first and second chamber 210, 220.

At least one of the third and fourth valve 190, 192 may be adapted to be controllable by electromechanical means. Both may be adapted to be controllable by electromechanical means. Either or both may be electromechanical valves.

With reference to Fig. 6, there is illustrated an example of pressure variation of rebound chamber pressure as a function of piston movement. The vertical axis may represent the pressure in first chamber 210 of the shock absorber 200. The horizontal axis may represent a position of the piston 232 inside the shock absorber 200. By position of the piston it may be meant a position of the piston within its range of motion within the shock absorber 200. The shock absorber 200 may be connected to the valve arrangement 100.

During the compression stroke, the piston 232 moves to the right on the horizontal axis. During the rebound stroke the piston 232 moves to the left of the horizontal axis. The value 0 on the horizontal axis may represent a position of the piston 232 when the shock absorber 200 is in a neutral state. By neutral state it may be meant a state which the shock absorber 200 will stabilize towards when there is a net zero pressure differential over the piston 232.

A first dot D1 marks a position of the piston 232 when it transitions from a rebound a stroke into a compression stroke. At the first dot D1, the rebound chamber pressure and the compression chamber pressure may be equal to the neutral pressure. Alternatively, at the first dot D1, the rebound chamber pressure and the compression chamber pressure may differ from the neutral pressure due to suspension in the valve arrangement (100).

During the compression stroke, rebound chamber pressure may initially decrease. The valve arrangement 100 may advantageously be adapted for minimizing the initial rebound chamber pressure drop. This may for example be done by providing a resilient member 175 in the first valve 150. The resilient member 175 may be tuned such that a predetermined pressure differential over piston 232 is required for the first valve 150 to regulate the first main flow path F1 to be open. This is advantageous for, at an initial stage of the compression stroke, the first valve 150 may regulate the first main flow path F1 to be closed to prevent damping fluid to flow from the rebound chamber to the reservoir chamber 310. The positive piston rod fluid displacement may thereby generate a local pressure increase in the rebound chamber, which may mitigate the initial rebound chamber pressure drop.

At a second dot D2, a pressure differential over the piston 232 may be at least equal to the predetermined pressure differential and is thereby affecting the first valve 150 to regulate the first main flow path F1 to be open. When the first main flow path F1 is open, the reservoir chamber 310 is fluidly connected to the rebound chamber via the first main flow path F1. Thereby, fluid flow generated from positive piston rod fluid displacement is enabled to flow from the rebound chamber to the reservoir chamber 310 via the first main flow path F1.

Additionally, the reservoir 300 is enabled to pressurize the rebound chamber to not fall short of the neutral pressure. At the third dot D3, it is illustrated that the rebound chamber pressure may be recovered to the level of the neutral pressure. By increasing or decreasing pressure drop over the valve arrangement 100, the pressure level after the third dot D3 may be tuned. For example, the pressure drop over the valve arrangement 100 may be increased for increasing the rebound chamber pressure after the third dot D3, and vice versa.

The valve arrangement 100 may also allow for fluid flow caused by piston rod fluid displacement to flow from the rebound chamber to the reservoir chamber 310. This may mitigate that the pressure in the rebound chamber, during the compression stroke, doesn't exceed to high above the neutral pressure.

According to one embodiment of the present disclosure, a shock absorber 200 comprises a valve arrangement 100 as disclosed herein. The shock absorber 200 may comprise a reservoir 300 or be adapted to be fluidly connected to a reservoir 300 via the valve arrangement 100.

With reference to Fig. 1, the valve arrangement 100 is arranged in a system comprising a shock absorber 200, a reservoir 300 and the valve arrangement 100. The shock absorber 200 may comprise a piston chamber 210, 220 and a piston 232. The piston 232 may divide the piston chamber 210, 220 into a first chamber 210 and a second chamber 220. The piston 232 may be attached to a piston rod 234 extending through the first chamber 210. The piston 232 may move relative the piston chamber 210, 220 in a compression stroke, which may be defined as a direction along the longitudinal extension of the piston chamber 210, 220 for compressing the second chamber 220. The piston 232 may move in relation to the piston chamber 210, 220 in a rebound stroke, which may be defined as the opposite direction of the compression stroke.

The piston 232 may comprise a compression valve 190 and a rebound valve 192. The first port 110 may be fluidly connected to the first chamber 210. The second port 120 may be fluidly connected to the second chamber 220.

Fig. 5 illustrates schematically a method for adjusting a damping fluid flow in a shock absorber 200. The method comprises providing S1 a valve arrangement 100 as disclosed herein. The method further comprises, in response to a first pressure input from the first or second chamber 210, 220, operating S2 the valve arrangement 1 such that the first valve 150 is open and the second valve 180 is closed, and/or in response to a second pressure input from the first or second chamber 210, 220, operating S3 the valve arrangement 1 such that the first valve is closed and the second valve is open.

The method may comprise one or more additional steps discussed in relation to the valve arrangement 100 according to the first aspect or any embodiments thereof.

In the drawings and specification, there have been disclosed preferred embodiments and examples of the disclosure and, although specific terms are employed, they are used in a generic and descriptive sense only and not for the purpose of limitation, the scope of the invention being set forth in the following claims.

### List of reference signs

100 - valve arrangement
110-first port
120 - second port
122 - pressure input flow path
130-third port
140-fourth port
150 - first valve
151- first flow port
152 - second flow port
153 - pressure input port
160-valve housing
161 - first valve housing side
162 - second valve housing side
164 - valve cavity
164A - first valve cavity portion
164B - second valve cavity portion
170-valve member
171 - first main flow closing portion
172 - partition portion
175 - resilient member
180 - second valve
190-third valve
191 - first auxiliary flow path
192-fourth valve
193 - second auxiliary flow path
194-fifth valve
200 - shock absorber
210-first chamber
220 - second chamber
230 - piston assembly
232 - piston
234 - piston rod
236 - compression valve
238 - rebound valve
300 - reservoir
310 - reservoir chamber
320 - reservoir inlet
F1 - first main flow path
F2 - second main flow path
F3 - third main flow path
D1- first dot
D2 - second dot
D3 - third dot

## Claims

1. A valve arrangement (100) for use with a shock absorber (200) and a reservoir (300), comprising
a first port (110) adapted to be fluidly connected to a first chamber (210) of the shock absorber (200);
a second port (120) adapted to be fluidly connected to a second chamber (220) of the shock absorber (200);
a third and a fourth port (130, 140), each of which are adapted to be fluidly connected to a reservoir chamber (310) in the reservoir (300);
the valve arrangement (100) is adapted to be able to provide a first main flow path (F1) between the first port (110) and the third port (130), and a second main flow path (F2) between the fourth port (140) and the second port (120),
the valve arrangement (100) comprising a first valve (150) for regulating flow in the first main flow path (F1), and a second valve (180) for regulating flow in the second main flow path (F2)
wherein
the first valve (150) comprises a first flow port (151) and a second flow port (152), wherein the first valve is adapted to operate between a closed position and an open position for regulating flow between the first flow port (151) and the second flow port (152) in response to a pressure input from the first and/or the second chamber (210, 220).

2. The valve arrangement (100) according to claim 1,
wherein the first valve (150) is adapted to operate to an open position in response to a first pressure differential between the first port (110) and second port (120), wherein pressure in the second port (120) is higher than pressure in the first port (110), and/or
wherein the first valve (150) is adapted to operate to a closed position in response to a second pressure differential between the first port (110) and the second port (120), wherein pressure in the second port (120) is lower than pressure in the first port (110).

3. The valve arrangement (100) according to claim 2, wherein said first pressure differential corresponds to a pressure differential over a piston assembly (230) of the shock absorber (200).

4. The valve arrangement (100) according to any one of claims 2 and 3, wherein the first valve (100) comprises a pressure input port (153) fluidly connected to the second port (120), wherein the pressure input port (153) is adapted for enabling the first valve (150) to be exposed to said pressure differential.

5. The valve arrangement (100) according to claim 4, adapted such that the pressure input port (153) is fluidly connectable to the second chamber (220).

6. The valve arrangement (100) according to any one of claims 4 and 5, the first valve (150) comprising a valve member (170) adapted to be moveable relative a valve housing (160) to open or close the first valve (150), wherein a first side of the valve member (170) is fluidly connected to the pressure input port (153) and a second side of the valve member (170) is fluidly connected to the first flow port (151), wherein the first valve (150) is adapted such that it opens as a result of a first pressure differential acting on the valve member (170) reaching a first predetermined pressure differential.

7. The valve arrangement (100) according to claim 6, wherein the first valve (150) comprises one or more resilient members such as a spring for applying a force on the valve member (170) for closing the first valve.

8. The valve arrangement (100) according to any one of the preceding claims, wherein the valve arrangement (100) is adapted to provide at least one bleed flow path fluidly connecting the first port (110) and the second port (120).

9. The valve arrangement (100) according to any one of the preceding claims, wherein the second valve (180) is a pressure regulated valve such as a check valve.

10. The valve arrangement (100) according to any one of the preceding claims, wherein the valve arrangement (100) is adapted to be at least partly or wholly arranged at a piston assembly (230) of the shock absorber (200).

11. The valve arrangement (100) according to any one of the preceding claims, wherein the first valve (150) is controllable by electromechanical means.

12. The valve arrangement (100) according to any one of the preceding claims, wherein the valve arrangement (100) comprises
a third and/or a fourth valve (190, 192) arranged to regulate damping fluid along flow paths fluidly connecting the first port (110) and the second port (120).

13. The valve arrangement (100) according to claim 12, wherein in at least one of the third and fourth valve (190, 192) is adapted to be controlled by electromechanical means.

14. A shock absorber comprising a valve arrangement (100) according to any one of the preceding claims.

15. A method for adjusting a damping fluid flow in a shock absorber (100), the method comprising the steps of:
i. providing a valve arrangement (100) according to any one of claims 1-13;
ii. in response to a first pressure input from the first and/or the second chamber (210, 220), operating the valve arrangement (100) such that the first valve (150) is open and the second valve (180) is closed; and/or
iii. in response to a second pressure input from the first and/or the second chamber (210, 220), operating the valve arrangement (100) such that the first valve (150) is closed and the second valve (180) is open.
